(19) Europäisches Patentamt

European Patent Office

Office européen des brevets

(11) Veröffentlichungsnummer: **0 667 358 A2**

(12) **EUROPÄISCHE PATENTANMELDUNG**

(21) Anmeldenummer: **95100229.4**

(22) Anmeldetag: **10.01.95**

(51) Int. Cl.6: **C08F 116/34**, C08L 29/14, A01N 35/02

(30) Priorität: **11.02.94 DE 4404404**

(43) Veröffentlichungstag der Anmeldung: **16.08.95 Patentblatt 95/33**

(84) Benannte Vertragsstaaten: **AT BE CH DE DK FR GB IT LI LU NL SE**

(71) Anmelder: **Degussa Aktiengesellschaft Weissfrauenstrasse 9 D-60311 Frankturt (DE)**

(72) Erfinder: **Werle, Peter, Dr. Im Boerner 43 D-63571 Gelnhausen (DE)** Erfinder: **Höpp, Mathias, Dr. Villbacher Strasse 32 a D-63599 Biebergemünd-Kassel (DE)** Erfinder: **Helmling, Oswald, Dr. Wiesenstrasse 15 D-63594 Hasselroth (DE)** Erfinder: **Arntz, Dietrich, Dr. Lorsbachstrasse 32 D-61440 Oberursel (DE)**

(54) **Acroleinpolymer.**

(57) Das Acroleinhomopolymer ist gekennzeichnet durch die physikalisch-chemischen Daten:

$$\text{Gewichtsmittel}\quad \frac{\Sigma\, n_i\, M_i^2}{\Sigma\, n_i\, M_i} = M_w, \text{ wobei } n_i = \text{Molzahl und } M_i = \text{Molgewicht bedeuten}$$

| | |
|---|---|
| Mw: | 2000 - 6000 D |
| Carbonylgehalt: | 0,5 - 5 Mol/kg Polymer |

Es wird hergstellt, indem man Acrolein und Katalysator gleichzeitig zu einem vorgelegten Reaktionsmedium derart zugibt, daß die Temperatur des Reaktionsmediums 25 °C nicht übersteigt und der pH-Wert des Reaktionsmediums 10 bis 11 beträgt, nach Abschluß der Zugabe nachrührt und das Acroleinpolymer abtrennt. Das Acroleinpolymer wird in bioziden Mitteln eingesetzt.

EP 0 667 358 A2

Die Erfindung betrifft ein Acroleinpolymer, ein Verfahren zu seiner Herstellung, ein Verfahren zur Konservierung von Stoffen unter Verwendung des Acroleinpolymers sowie ein biozides Mittel, welches das Acroleinpolymer enthält.

Es ist bekannt, monomeres Acrolein (2-Propenal) als sehr effektives Biozid in Wasserkanälen gegen unerwünschten Algen- und Pflanzenwuchs einzusetzen. Ebenfalls kann es zur Bekämpfung von sulfatreduzierenden Bakterien bei der Erdölexploration eingesetzt werden.

Weitere Anwendungsbereiche für die biozide Wirkung des monomeren Acroleins sind bisher aufgrund der hohen Reaktivität nicht erschlossen worden. Wegen seiner Neigung bei unsachgemäßer Behandlung spontan und gegebenenfalls explosionsartig zu polymerisieren, kann es nur unter besonderen Sicherheitsmaßnahmen gehandhabt werden. Es hat eine starke Reizwirkung auf die Atmungsorgane und die Augen. Selbst in stabilisierter Form ist Acrolein nur begrenzt lagerfähig.

Es ist bekannt, Copolymere des Acroleins mit Formaldehyd, die durch Kondensation von Acrolein und Formaldehyd im molaren Verhältnis zwischen 1 : 1 und 1 : 10 in Gegenwart eines basischen Katalysators hergestellt wurden, als Biozide für wäßrige Systeme einzusetzen (DE-B 32 05 487). Das bekannte Copolymer des Acroleins mit Formaldehyd hat den Nachteil, daß es ca. 15 % Formaldehyd enthält.

Es ist bekannt, Homopolymere des Acroleins als Biozide einzusetzen (EP-A 0 339 044). Die Polymerisation wird überwiegend radikalisch oder ionisch mittels Natriumhydroxidlösung durchgeführt.

Die radikalisch erzeugten Homopolymere des Acroleins sind nachteiligerweise in organischen Medien oder in Wasser praktisch nicht löslich und zeigen in Form einer wäßrigen Suspension nur eine sehr niedrige biologische Aktivität. Auch das im Beispiel 1b der EP-A 0 339 044 beschriebene anionisch polymerisierte Acrolein zeigt in wäßriger Suspension eine nur unbefriedigende Wirkung gegen Mikroorganismen.

Die beschriebene Auflösung in Methylalkohol ist aus toxikologischen Gründen zur Herstellung handelsfähiger Produkte nicht geeignet. Auch zeigt sie nur eine mäßige biozide Wirksamkeit.

Das in der EP-A 0 339 044 beschriebene Verfahren der Zugabe eines Katalysators zu einer Acroleinlösung ist wegen der dadurch spontan ausgelösten, stark exothermen Reaktion technisch nicht durchführbar.

Es besteht somit die Aufgabe, ein Acroleinpolymer, das toxikologisch unbedenklich und sicher ist und eine hohe biozide Wirkung aufweist, herzustellen.

Gegenstand der Erfindung ist ein Acroleinpolymer, welches dadurch gekennzeichnet ist, daß es die folgenden physikalisch-chemischen Parameter aufweist:

$$\text{Gewichtsmittel} \quad \frac{\Sigma \, ni \, Mi^2}{\Sigma \, ni \, Mi} = Mw, \text{ wobei } ni = \text{Molzahl und } Mi = \text{Molgewicht bedeuten}$$

| Mw: | 2000 - 6000 D |
|---|---|
| Carbonylgehalt: | 0,5 - 5 Mol/kg Polymer |

Ein weiterer Gegenstand der Erfindung ist ein Verfahren zur Herstellung des Acroleinpolymers, welches dadurch gekennzeichnet ist, daß man Acrolein und Katalysator gleichzeitig zu einem vorgelegten Reaktionsmedium derart zugibt, daß die Temperatur des Reaktionsmediums 25 °C nicht übersteigt und der pH-Wert des Reaktionsmediums 10 bis 11 beträgt, nach Abschluß der Zugabe nachrührt und das Acroleinpolymer abtrennt.

Als Reaktionsmedium kann in einer bevorzugten Ausführungsform der Erfindung Wasser eingesetzt werden. Als Katalysator kann eine wäßrige Natronlauge mit einer Konzentration von 0,01 bis 10 Mol/l eingesetzt werden. Die Temperatur des Reaktionsmediums kann bevorzugt 20 bis 25 °C betragen. Das Verhältnis von Acrolein und Katalysator kann 1 : 0,0001 bis 1 : 0,05 betragen. Die Nachrührzeit kann 1 bis 3 Stunden, vorzugsweise 1 bis 2,5 Stunden betragen.

Aus der erhaltenen wäßrige Polyacroleindisperison mit einem Gehalt von ca. 5 bis ca. 30 % ist der Feststoff dann mit akzeptablen Raum/Zeit-Ausbeuten isolierbar, wenn die pH-Wert-Einstellung während der Reaktion im geforderten Bereich liegt. Mit Zentrifugen herkömmlicher Bauart läßt sich das Polymer gut abschleudern und von noch anhaftendem Acrolein durch sorgfältiges Waschen mit Wasser befreien.

Das der Zentrifuge entnommene noch wasserfeuchte Produkt mit einem Wassergehalt von ca. 35 % läßt sich bei 40 bis 50 °C in kurzer Zeit in vielen mehrwertigen Alkoholen, wie Propylenglykol, Butylenglykol sowie Glykolen der allgemeinen Formel $HO(CH_2CH_2O)_nH$ gut lösen. Vorzugsweise finden Ethylen- und Propylenglykol, deren Oligomere oder Ether Verwendung. Die so hergestellten Lösungen können einen Gehalt von bis zu 30 Gew.-% Polymer besitzen. Sie sind klar, farblos oder schwach gelb gefärbt. Darüber hinaus sind diese Lösungen in $(HO(CH_2CH_2O)_nH)$ ungiftig, nahezu geruchlos und stellen wirksame Biozide dar.

Dipolar aprotische Lösungsmittel, wie Aceton, Dimethylsulfoxid, Methylpyrolidon, Dimethylformamid, Tetramethylharnstoff, können ebenfalls gute Lösungsmittel für das Polymere darstellen.

Bei der Anwendung in vielen Bereichen, wie Konservierung von Farbdispersionen, Leimen, Textilhilfsmitteln, Wachsemulsionen, Holzschutzlacken und vielen anderen können diese Lösungen unter Rühren homogen verteilt werden.

Die Überführung des feuchten Zentrifugenproduktes in ein getrocknetes biozid aktives Pulver ist technisch durch Verwendung eines vorzugsweise im Vakuum betriebenen Tellertrockners möglich. Aufgrund der niederen Schütthöhe auf den einzelnen Tellern und der vorsichtigen Bewegung durch den Krählarm gelingt es, ein sehr feines Produkt zu erhalten. Der Trockner wird bei Temperaturen von 20 bis 50 °C unter einem Druck von 1 bis 100 mbar betrieben.

Eine weitere Lösung des Trocknungsproblems wurde durch die Verwendung eines Wirbelschichttrockners gefunden. Dieser liefert aufgrund des hohen Luftdurchsatzes und der intensiven mechanischen Reibung der einzelnen Produktpartikel aneinander ein äußerst feinteiliges Pulver, welches ohne weitere Vermahlung direkt abgefüllt werden kann.

Bei der Wirbelschichttrocknung erweist es sich als vorteilhaft, ein Temperaturprogramm zu verwenden, wobei zunächst mit einer niedrigen Temperatur begonnen und diese stufenweise gesteigert wird. Vorzugsweise beginnt man bei Raumtemperatur und steigert die Trocknungstemperatur bis auf 75 °C. Das durch dieses Trocknungsverfahren gewonnene Polymer liegt als schwach gelbes Pulver mit einer Primärteilchengröße von wenigen Mikrometern vor.

Ein Einsatz des erfindungsgemäßen Acroleinpolymers als Konservierungsmittel oder Biozid ist durch direktes Einarbeiten möglich, vorteilhaft können aber auch hier Lösungen in mehrwertigen Alkohlen des oben beschriebenen Typs verwendet werden. Beim Eingießen dieser Lösungen in wäßrige Medien erfolgt eine Ausfällung des Polymeren, die bei ungenügender Homogenisierung zu einem Verlust an biozider Wirksamkeit führen kann.

Überraschend wurde gefunden, daß durch den Zusatz einer kleinen Menge einer anorganischen oder organischen Base zu den alkoholischen Lösungen wasserverdünnbare oder zumindest mikrodisperse Systeme mit nur schwachem Tyndall-Effekt erhältlich sind. Bezogen auf 1 kg einer 10 Gew.-%igen Lösung des Polymers können 0,05 bis 0,1 Mol Base eingesetzt werden. Üblicherweise wird Natriumhydroxid in wäßriger Lösung verwendet. Aber auch Na-alkylate können eingesetzt werden. Zusätzlich zu der verbesserten Löslichkeit wird eine deutliche Steigerung der desinfizierenden Wirkung im Kurzzeittest gefunden. Man kann also von einer Aktivierung der Lösungen durch die Hydroxylionen sprechen. Dieses Verhalten des Polyacroleins hängt in überraschender und nicht vorhersehbarer Weise von den Trocknungsbedingungen ab. Bei Raumtemperatur oder ≤ 60 °C getrocknete und gegebenenfalls vermahlene Produkte zeigen den Effekt der Solubilisierung durch Basenzusatz nicht. Einzig die nach dem erfindungsgemäßen Verfahren in starkem Luftstrom bei Endtemperaturen > 60 °C, vorzugsweise bei 75 °C, getrockneten Präparate sind alkalilöslich.

Ein weiterer Gegenstand der Erfindung ist ein Verfahren zur Konservierung von Stoffen, welches dadurch gekennzeichnet ist, daß man das erfindungsgemäße Acroleinpolymer zusetzt.

Insbesondere kann man das erfindungsgemäße Acroleinpolymer den folgenden Stoffen zusetzen: Kunststoffdispersionen, Sanierungslösungen zur Bekämpfung von Schimmel auf Holz, Fassaden und Wänden, Wandanstriche, Farbstoffteige und Pasten, Dichtungsmassen, Leimfarben, Holzschutzlacke, Klebstoffemulsionen, Haut- und Lederleime, Knochenleime, Stärkeleime, Casein-Leime, Dextrin-Klebstoffe, Salzhäute, Pickellösungen, Trockenhäute, Gerbbrühe, feuchtes Chromleder, Fertigleder, Spinnbäder, Wachsemulsionen, Waschrohstoffe, Textilausrüstung (antifungal), Textilappreturen, Papier/Pappe (antifungal), PVC-Beschichtung (antifungal), Bohr- und Schneidöle (verdünnt), Bohr- und Schneidöle (konzentriert), Holzkonservierungsstoffen, Cellulosefaser (Verrottungsschutz), Verfugungszement, Schiffsfarben, flüssige Reinigungsmittel.

Das erfindungsgemäße Acroleinpolymer kann dabei in Mengen von 0,01 bis 0,3 Gew.-% den Stoffen zugesetzt werden.

Ein weiterer Gegenstand der Erfindung ist ein biozides Mittel, welches das erfindungsgemäße Acroleinpolymer enthält. Das biozide Mittel kann dabei das erfindungsgemäße Acroleinpolymer in einem mehrwertigen Alkohol, zum Beispiel Ethylenglykol, gelöst (zum Beispiel 10 % Lösung) enthalten. Zusätzlich kann das biozide Mittel ein Oxidationsmittel, wie $H_2O_2$ oder Peressigsäure, und gegebenenfalls ein Alkalihydroxid, wie NaOH, enthalten.

In einer anderen Ausführungsform der Erfindung kann das biozide Mittel eine anorganische oder eine organische Base, wie zum Beispiel NaOH oder Natriumalkylate (zum Beispiel Natriummethylat), enthalten. Das biozide Mittel kann das erfindungsgemäße Acroleinpolymer in einer 20 % Dispersion in Wasser enthalten.

Bei überwiegend wäßrigen Systemen und ungenügender Durchmischung während der Einarbeitung kann das gelöste Polymer in groben Partikeln ausfallen und so Anlaß zu einer verminderten bioziden Wirksamkeit geben.

Es wurde nun gefunden, daß die glykolhaltigen Polymerlösungen durch Behandeln mit geringen Mengen von Oxidationsmitteln, wie Wasserstoffperoxid oder Peressigsäure, mit gegebenenfalls nachträglichem Zusatz von etwas Natronlauge so modifiziert werden können, daß in Wasser lösliche oder mikrodisperse Systeme entstehen, die die durch eine Ausfällung möglichen Nachteile nicht aufweisen. Die zugesetzte Menge an Oxidationsmittel, angewendet auf eine 10 Gew.-% Polymerlösung, die 100 g festes Polymer enthält, kann 0,1 Mol bis 0,4 Mol, vorzugsweise 0,2 Mol bis 0,3 Mol reines Oxidationsmittel betragen. Die gegebenenfalls zugesetzte Lauge wird vorzugsweise in Mengen von 0,05 bis 0,1 Mol (als NaOH) eingesetzt.

Beispiele

Beispiel 1 (Vergleichsbeispiel)

Das Beispiel 1b gemäß der EP-A 0 339 044 wird nachgearbeitet und das erhaltene getrocknete Polyacrolein in Methanol gelöst (10 % Wirkstoffgehalt). Ein Teil der Lösung wird eingedampft und wieder mit Methanol aufgenommen (vgl. EP-A 0 339 044, Beispiel 1a):

Das in der EP-A 0 339 044 beschriebene Verfahren scheidet aus Sicherheitsgründen für eine technische Darstellung aus. Legt man andererseits den Katalysator, im allgemeinen eine wäßrige anorganische Base oder ein basisches Amin, vor und gibt das Acrolein unter starker externer Kühlung in dem Maße zu, daß die Temperatur im Reaktor 25 °C nicht übersteigt, so erhält man farblose bis schwach gelbe Niederschläge, die sich in den erfindungsgemäßen Lösungsmitteln nur schwer oder nicht vollständig lösen lassen. Selbst bei erhöhter Temperatur (80 °C) verbleiben unlösliche Polymeranteile. Darüber hinaus führt die hohe Temperaturbelastung zu einer unerwünschten Verfärbung dieser Lösungen.

Beispiel 2 (gemäß Erfindung)

Es werden 330 ml Wasser und 2,0 ml 1N-NaOH vorgelegt und unter Kühlung bei 5 bis 20 °C 120 ml Acrolein und 6,8 ml 1N-NaOH verdünnt mit 60 ml Wasser innerhalb von ca. 30 min gleichmäßig zudosiert. Man läßt 1 h bei Raumtemperatur nachrühren, trennt das feste Polymer ab, wäscht es sorgfältig mit Wasser und trägt das Polymer unter Rühren in 700 g Ethylenglykol, das auf 45 bis 50 °C erwärmt wurde, ein. Innerhalb von ca. 30 bis 60 min erhält man eine hellgelbe, klare Polymerlösung mit einem Wirkstoffgehalt von 10 %. Bei dem Eingießen dieser Lösung in Wasser ergibt sich eine starke Ausfällung.

Das Polymer - nach der Abtrennung bei Raumtemperatur im Vakuum getrocknet - hat einen Carbonylgehalt von 0,7 Mol/kg und ein Gewichtsmittel von Mw = 3500 D.

Beispiel 3

100 g einer gemäß Beispiel 2 hergestellten Polyacroleinlösung werden bei 20 bis 25 °C mit 4,5 ml einer 30 Gew.-%igen $H_2O_2$-Lösung versetzt und auf 70 bis 75 °C erwärmt. Man läßt die Lösung 1 bis 2 Stunden bei dieser Temperatur. Beim Eingießen einer solchen Lösung in Wasser wird nurmehr eine schwache Trübung sichtbar. Die Nachoxidation mit $H_2O_2$ führt also zu einer verbesserten Löslichkeit in wäßrigen Systemen.

Beispiel 4

125 l Wasser werden vorgelegt und mit 5 l 1%iger NaOH-Lösung versetzt. Die Lösung wird auf +5 °C gekühlt. 25 l Acrolein und 5 l 1%ige NaOH-Lösung werden so zugegeben, daß die Innentemperatur nicht über +25 °C steigt. Das Reaktionsgemisch wird noch 2 h gerührt und anschließend zentrifugiert. Der Feststoff wird auf der Zentrifuge gewaschen und ausgekühlt.

Man erhält 24 kg feuchtes Polymer, die in zwei Portionen nach folgendem Programm im Wirbelschicht-trockner getrocknet werden:

| | |
|---|---|
| 1 h | 25 °C |
| 1 h | 35 °C |
| 3 h | 75 °C |

Man erhält insgesamt 15 kg getrocknetes Polymer mit einem Carbonylgehalt von 2,2 Mol/kg und einem Gewichtsmittel von Mw = 4000 D.

Beispiel 5

Ein gemäß Beispiel 4 hergestelltes Polymer wird unter Erwärmen in Ethylenglykol gelöst und 100 g dieser 10%igen Lösung werden mit 200 mg NaOH (gelöst in wenig Wasser) oder mit 300 mg festem NaOCH$_3$ versetzt. Während die nicht alkalibehandelte Lösung beim Eingießen in Wasser starke Abscheidungen von polymerem Acrolein zeigt, zeigt die mit OH⁻behandelte Lösung nur eine schwache Trübung. Das heißt, daß die Löslichkeit in Wasser durch den Zusatz von OH⁻-Ionen verbessert wird.

Die mikrobiozide Wirkung der hergestellten Präparate wird mit dem sogenannten Time-Kill-Test(TKT) ermittelt. Bei diesem in Anlehnung an die Empfehlungen des American Petroleum Instituts (API, RP 38 2nd ed., Dec. 1965) durchgeführten Test wird eine hoch angereicherte Keimsuspension (Keimzahl $10^6$ bis $10^8$) mit der gewünschten Menge Biozid versetzt und 24 Stunden bei 25 °C bebrütet. Anschließend wird inaktiviert und eine geometrische Verdünnungsreihe bis 6 durchgeführt; je 1 ml wird mit 10 ml Nähragar auf Platten vermischt und 48 Stunden bei 37 °C bebrütet. Aus der Auszählung der Kolonien wird die Abtötungsrate berechnet.

Die Auswertung wird dabei wie folgt durchgeführt:

Es wird der arithmetische Mittelwert aus 2 Werten (Doppelbestimmung) gebildet. Die Keimreduktionszahl $KR_t$ pro Zeit im TKT (24 h) auch mit Bewertungszahl benannt, berechnet sich mit der Gleichung:

$$KR_t = \log KBE_{(Kontrolle)} - \log KBE_{(D)}$$

$KBE_{(Kontrolle)}$      = die Anzahl KBE/ml ohne Einwirkung des Präparates (auch die O-Probe)

$KBE_{(D)}$      = die Anzahl KBE/ml nach Einwirkung des Präparates

Für eine gute Wirkung sind Reduktionen von mindestens 5 log-Stufen zu erzielen.

| Keimart: Pseudomonas aeruginosa ATCC 15442 | | | | | |
|---|---|---|---|---|---|
| Beispiel Nr. | Temp. | pH-Wert | Zeit [h] | Konz. [ppm] | $KR_t$ |
| 1 (Vergleichsbeispiel) | 25 | 6,5 | 24 | 500 | 2,8 |
| 1a | 25 | 6,5 | 24 | 500 | 5,8 |
| 2 | 25 | 6,5 | 24 | 500 | >7,4 |
| 3 | 25 | 6,5 | 24 | 500 | > 7,4 |
| 4 | 25 | 6,5 | 24 | 500 | > 7,4 |
| | 25 | 6,5 | 24 | 200 | 3,0 |
| 5 | 25 | 6,5 | 24 | 200 | > 7,4 |

**Patentansprüche**

**1.** Acroleinpolymer, dadurch gekennzeichnet, daß es die folgenden physikalisch-chemischen Parameter aufweist:

$$\frac{\text{Gewichtsmittel} \quad \Sigma\ ni\ Mi^2}{\Sigma\ ni\ Mi} = Mw,\ \text{wobei}\ ni = \text{Molzahl und}$$

$Mi$ = Molgewicht

bedeuten

| Mw: | 2000 - 6000 D |
|---|---|
| Carbonylgehalt: | 0,5 - 5 Mol/kg Polymer |

2. Verfahren zur Herstellung des Acroleinpolymers nach Anspruch 1, dadurch gekennzeichnet, daß man Acrolein und Katalysator gleichzeitig zu einem vorgelegten Reaktionsmedium derart zugibt, daß die Temperatur des Raktionsmediums 25 °C nicht übersteigt und der pH-Wert des Reaktionsmediums 10 bis 11 beträgt, nach Anschluß der Zugabe nachrührt und das Acroleinpolymer abtrennt.

3. Verfahren zur Konservierung von Stoffen, dadurch gekennzeichnet, daß man diesen Stoffen das Acroleinpolymer gemäß Anspruch 1 zusetzt.

4. Verfahren zur Konservierung nach Anspruch 3, dadurch gekennzeichnet, daß man das Acroleinpolymer den folgenden Stoffen zusetzt:
Kunststoffdispersionen, Sanierungslösungen zur Bekämpfung von Schimmel auf Holz, Fassaden und Wänden, Wandanstriche, Farbstoffteige und Pasten, Dichtungsmassen, Leimfarben, Holzschutzlacke, Klebstoffemulsionen, Haut- und Lederleime, Knochenleime, Stärkeleime, Casein-Leime, Dextrin-Klebstoffe, Salzhäute, Pickellösungen, Trockenhäute, Gerbbrühe, feuchtes Chromleder, Fertigleder, Spinnbäder, Wachsemulsionen, Waschrohstoffe, Textilausrüstung (antifungal), Textilappreturen, Papier/Pappe (antifungal), PVC-Beschichtung (antifungal), Bohr- und Schneidöle (verdünnt), Bohr- und Schneidöle (konzentriert), Holzkonservierung, Cellulosefaser (Verrottungsschutz), Verfugungszement, Schiffsfarben, flüssige Reinigungsmittel.

5. Biozides Mittel, dadurch gekennzeichnet, daß es das Acroleinpolymer gemäß Anspruch 1 enthält.

6. Biozides Mittel nach Anspruch 5, dadurch gekennzeichnet, daß das Acroleinpolymer in einem mehrwertigen Alkohol gelöst ist.

7. Biozides Mittel nach den Ansprüchen 5 und 6, dadurch gekennzeichnet, daß es ein Oxidationsmittel und gegebenenfalls Natronlauge enthält.

8. Biozides Mittel nach den Ansprüchen 5 und 6, dadurch gekennzeichnet, daß es eine anorganische oder eine organische Base enthält.